# EUROPÄISCHE PATENTSCHRIFT

(11) **EP 0 539 412 B1**
(45) Veröffentlichungstag und Bekanntmachung des Hinweises auf die Patenterteilung: **28.12.1994**
(21) Anmeldenummer: 91912524.5
(22) Anmeldetag: 05.07.1991
(51) Int. Cl.: G11B 11/10, G11B 5/09

(54) **SCHALTUNGSANORDNUNG ZUR UMKEHRUNG EINES MAGNETFELDES**
CIRCUIT ARRANGEMENT FOR REVERSING A MAGNETIC FIELD
CIRCUIT D'INVERSION D'UN CHAMP MAGNETIQUE

(30) Priorität: 13.07.1990 DE 4022400
(43) Veröffentlichungstag der Anmeldung: 05.05.1993
(73) Patentinhaber: Deutsche Thomson-Brandt GmbH, 78003 Villingen-Schwenningen (DE)
(72) Erfinder: ZUCKER, Friedhelm, D-7730 Villingen-Schwenningen (DE)
(74) Vertreter: Einsel, Robert, Dipl.-Ing.
(86) Internationale Anmeldenummer: EP9101261
(87) Internationale Veröffentlichungsnummer: WO9201286

(56) Entgegenhaltungen:
- EP-A- 0 304 298
- US-A- 3 244 904
- US-A- 3 274 610
- US-A- 3 337 748
- US-A- 3 737 735
- US-A- 3 849 670
- US-A- 4 346 340
- US-A- 4 404 476
- PATENT ABSTRACTS OF JAPAN vol. 10, No: 16 (E-375)(2073) 22 Januar 1986
- ELECTRONIC vol. 36, No.13, 13 November 1987, München, DE, pages 142 - 152
- PATENT ABSTRACTS OF JAPAN vol. 10, No: 348 (P-519)(2404) 22 October 1986, & JP, A, 61 148516

## Beschreibung

Die Erfindung betrifft eine Schaltungsanordnung zur Umkehrung eines Magnetfeldes mit einer Kapazität und einer ersten Spule, die einen Resonanzkreis bilden.

Derartige Schaltungsanordnungen werden z.B. in magneto-optischen Aufzeichnungs- und Wiedergabegeräten eingesetzt, um die Magnetisierungsrichtung in der magnetischen Schicht eines magneto-optischen Aufzeichnungsträgers umzukehren.

Ein bekannter magneto-optischer Aufzeichnungsträger ist die magneto-optische Platte, bei der hinter einer lichtdurchlässigen Schicht eine magneto-optische Schicht liegt, auf der Daten aufzeichenbar und von der diese Daten lesbar sind. Es wird zunächst erläutert, wie die Daten auf eine magneto-optische Platte geschrieben werden.

Mittels eines auf die Platte fokussierten Laserstrahls wird die magneto-optische Schicht auf eine Temperatur erhitzt, die in der Nähe der Curie-Temperatur liegt. Meist genügt es jedoch, die magneto-optische Schicht nur etwa bis zur Kompensationstemperatur aufzuheizen, die unter der Curie-Temperatur liegt. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Kompensationstemperatur abkühlt, bleibt die vom Elektromagneten festgelegte Magnetisierungsrichtung erhalten. Sie friert sozusagen ein. Auf diese Weise werden die einzelnen Bits in Domänen unterschiedlicher Magnetisierungsrichtung gespeichert Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

Aus der Drehung der Polarisationsebene des von der Platte reflektierten Lichtstrahls erkennt die optische Abtastvorrichtung, welches Bit vorliegt, eine logische Eins oder eine logische Null.

Eine bekannte Lösung, um die magneto-optische Schicht in die eine oder andere Richtung zu magnetisieren, sieht eine als Elektromagnet wirkende Schaltungsanordnung mit einer Spule hinter der magneto-optischen Platte vor. Die Spule ist so zu dimensionieren, daß sie den gesamten Bereich, den die optische Abtastvorrichtung überstreicht, umzumagnetisieren vermag. Dieser Bereich ist je nach Typ des Aufzeichnungs- und Wiedergabegerätes z.B, ein radialer oder kreisbogenförmiger Streifen, der vom Plattenrand zum Plattenmittelpunkt verläuft. Weil die Feldstärke auf dem gesamten Streifen einen Mindestwert erreichen muß, um den Streifen ummagnetisieren zu können, fallen der Querschnitt und damit die Induktivität der Spule relativ groß aus.

Bei einer weiteren bekannten Lösung ist die Spule auf der optischen Abtastvorrichtung befestigt. Die Spule kann z.B. um die Objektivlinse der optischen Abtastvorrichtung gewickelt sein. Weil bei dieser Lösung die Spule zusammen mit der optischen Abtastvorrichtung mittels eines Spurregelkreises entlang den Datenspuren auf der magneto-optischen Platte geführt wird, genügen ein geringerer Querschnitt und somit eine kleinere Induktivität, um dieselbe Mindestfeldstärke zu erzeugen, denn es wird nicht ein radialer oder kreisbogenförmiger Streifen, sondern nur ein kleiner beispielsweise kreisförmiger Bereich mit dem nahezu punktförmigen Laserfleck als Mittelpunkt in der magneto-optischen Schicht ummagnetisiert.

Aus der US-A 3 337 748 ist eine Schaltungsanordnung zur Ansteuerung einer Spule bekannt, bei der ein Ladekondensator parallel zur Spule geschaltet ist, um einen Resonanzkreis zu bilden. Der Ladekondensator wird durch den beim Ab- bzw. Umschalten weiter fließenden Spulenstrom aufgeladen. Im Resonanzbetrieb läßt sich damit ein Impuls mit einer der Resonanzfrequenz entsprechenden Impulslänge erzeugen.

Es ist nun Aufgabe der Erfindung, eine Schaltungsanordnung mit einer Spule so zu gestalten, daß eine sichere und schnelle Umkehrung des Magnetfeldes erzielt wird.

Die Erfindung löst diese Aufgabe dadurch, daß die Kapazität, ein erster steuerbarer Schalter sowie eine Reihenschaltung aus der ersten Spule und einem zweiten steuerbaren Schalter parallel geschaltet sind, daß an die beiden Anschlüsse des zweiten steuerbaren Schalters eine Stromquelle angeschlossen ist, daß der erste und der zweite steuerbare Schalter von einer Steuerschaltung gesteuert werden, daß im Grundzustand der erste steuerbare Schalter geschlossen, der zweite steuerbare Schalter dagegen geöffnet ist, daß zur Umkehrung des Magnetfeldes der ersten Spule die Steuerschaltung in einem ersten Schaltschritt den ersten steuerbaren Schalter öffnet und gleichzeitig den zweiten steuerbaren Schalter schließt, daß in einem zweiten Schaltschritt die Steuerschaltung den ersten steuerbaren Schalter wieder schließt und den zweiten steuerbaren Schalter wieder öffnet, wenn der Spulenstrom nach einem Umladezyklus der Kapazität wieder auf das absolute Maximum angestiegen ist.

Es zeigen
- Figur 1: ein erstes Ausführungsbeispiel der Erfindung
- Figur 2 bis 7: das erste Ausführungsbeispiel mit unterschiedlichen Schalterstellungen zur Erläuterung seiner Funktion
- Figur 8: den Strom I durch die Spule
- Figur 9: die Spannung U an der Kapazität.
- Figur 10: ein zweites Ausführungsbeispiel der Erfindung.

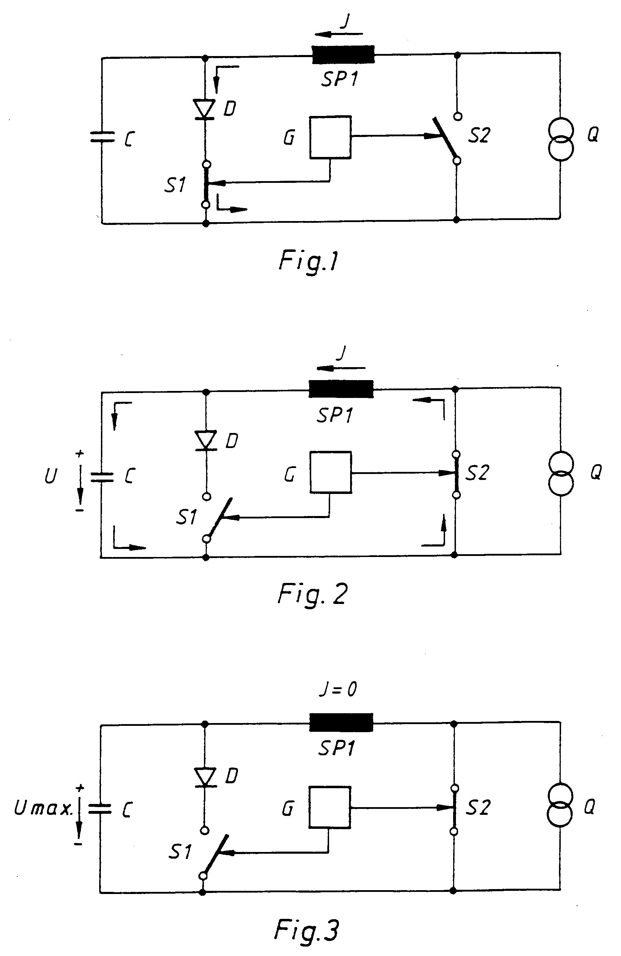

Anhand der Figur 1 wird ein erstes Ausführungsbeispiel der Erfindung zunächst beschrieben und anschließend anhand der Figuren 1 bis 9 erläutert.

In der Figur 1 ist eine Parallelschaltung aus einer Kapazität C, einer Reihenschaltung aus einer Diode D und einem steuerbaren Schalter S1 sowie einer Reihenschaltung aus einer Spule SP1 und einem steuerbaren Schalter S2 vorgesehen, dessen beide Anschlüsse mit den Polen einer Stromquelle Q verbunden sind. Die Diode D ist für die Stromquelle Q in Durchlassrichtung gepolt. Die Steuereingänge der beiden steuerbaren Schalter S1 und S2 sind mit einem Steuergerät G verbunden.

Anhand der Figuren 1 bis 9 wird das erste Ausführungsbeispiel nun erläutert.

In der Figur 1 ist der steuerbare Schalter S1 geschlossen, während der steuerbare Schalter S2 geöffnet ist. Es fließt daher ein konstanter Strom I durch die Spule SP, den die Stromquelle Q liefert. Die Spannung U an der Kapazität C ist daher null.

Zum Zeitpunkt t1 bewirkt die Steuerschaltung G, daß der steuerbare Schalter S1 geöffnet, der steuerbare Schalter S2 dagegen geschlossen wird, um die Stromquelle Q kurzzuschließen. Der Spulenstrom I nimmt nun langsam ab, während gleichzeitig die Spannung U an der Kapazität C auf ein absolutes Maximum Umax. ansteigt. Diesen Zustand zeigt Figur 2.

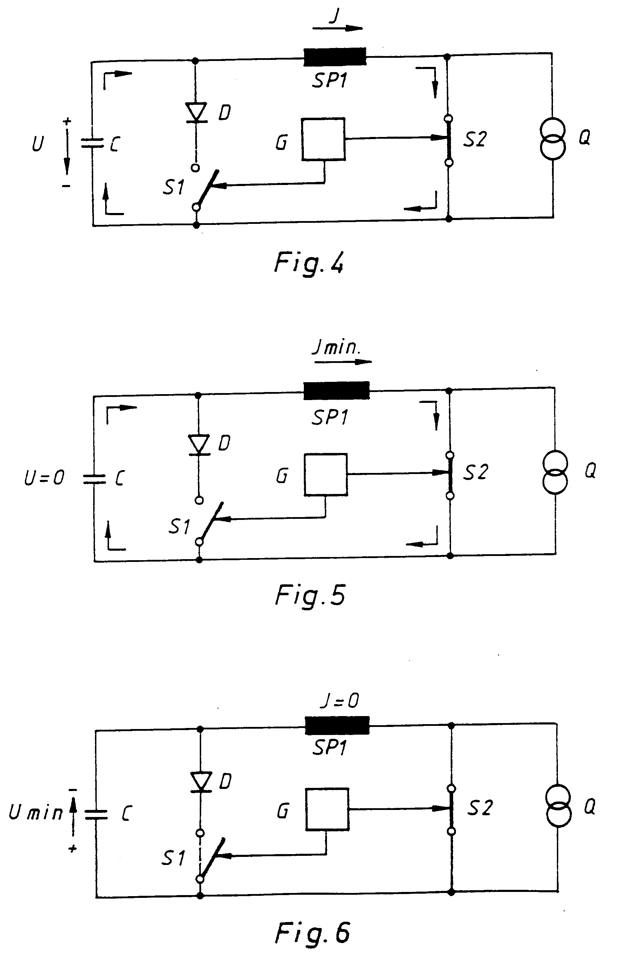

Zum Zeitpunkt t2 ist die Spannung Umax an der Kapazität C maximal, während gleichzeitig der Spulenstrom I null wird, wie in Figur 3 angedeutet ist. Weil sich die Kapazität C jetzt entlädt, nimmt die Spannung U ab, während gleichzeitig der Spulenstrom I in die andere Richtung fließend ansteigt. Dieser Zustand ist in Figur 4 abgebildet.

Zum Zeitpunkt t3 ist die Kapazität C vollständig entladen - die Spannung U ist also null - , dagegen erreicht der Spulenstrom I zum Zeitpunkt T3 das absolute Minimum Imin. Die Kapazität C wird jetzt umgeladen, wie aus Figur 5 ersichtlich ist.

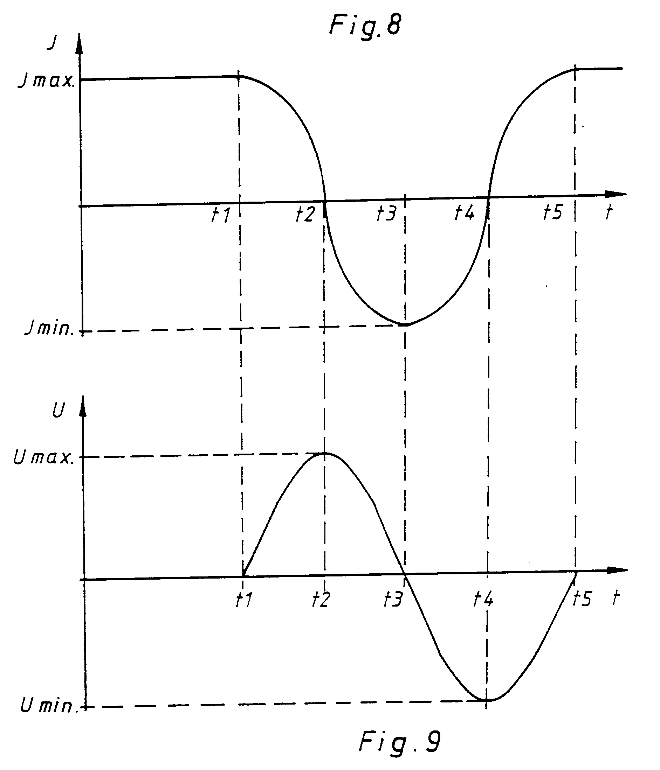

Während des Umladevorgangs, der in Figur 6 dargestellt ist, nsteigt der Spulenstrom I vom absoluten Minimum Imin auf den Wert Null an; gleichzeitig sinkt die Spannung U an der Kapazität C vom Wert Null auf das absolute Minimum Umin zum Zeitpunkt t4 ab. Weil sich die Kapazität C jetzt umlädt, wächst die Spannung U vom absoluten Minimum Umin auf den Wert Null an, während gleichzeitig der Spulenstrom I vom Wert Null auf das absolute Maximum Imax ansteigt. Dieser Umladevorgang ist in Figur 7 versinnbildlicht.

Zum Zeitpunkt t5 schließt die Steuerschaltung G den steuerbaren Schalter S1 und öffnet aen steuerbaren Schalter S2, damit die Stromquelle Q wieder einen Strom liefern kann, der vom einen Pol der Stromquelle Q über die Spule SP, die Diode D und den steuerbaren Schalter S1 zurück zum anderen Pol der Stromquelle Q fliesst. Es ist jetzt wieder der in Figur 1 abgebildete Ausgangszustand erreicht. Nun kann ein neuer Zyklus der Stromumkehr und damit der Umkehrung des von der Spule SP erzeugten Magnetfeldes beginnen.

Die Diode D ist für die Funktion der Erfindung nicht erforderlich. Sie hat aber den Vorteil, daß der steuerbare Schalter S1 bereits ab dem Zeitpunkt t3 geschlossen werden kann, denn sie verhindert, daß die in der Kapazität C und in der Spule SP gespeicherte Energie über den steuerbaren Schalter S1 kurzgeschlossen wird. Ohne die Diode D ist der steuerbare Schalter S1 genau zum Zeitpunkt t5 zu schließen. Mit der Diode D kann das Schließen des steuerbaren Schalters deshalb zwischen den Zeitpunkten t3 und t5 erfolgen. Der steuerbare Schalter S2 kann ab dem Zeitpunkt t5 geöffnet werden.

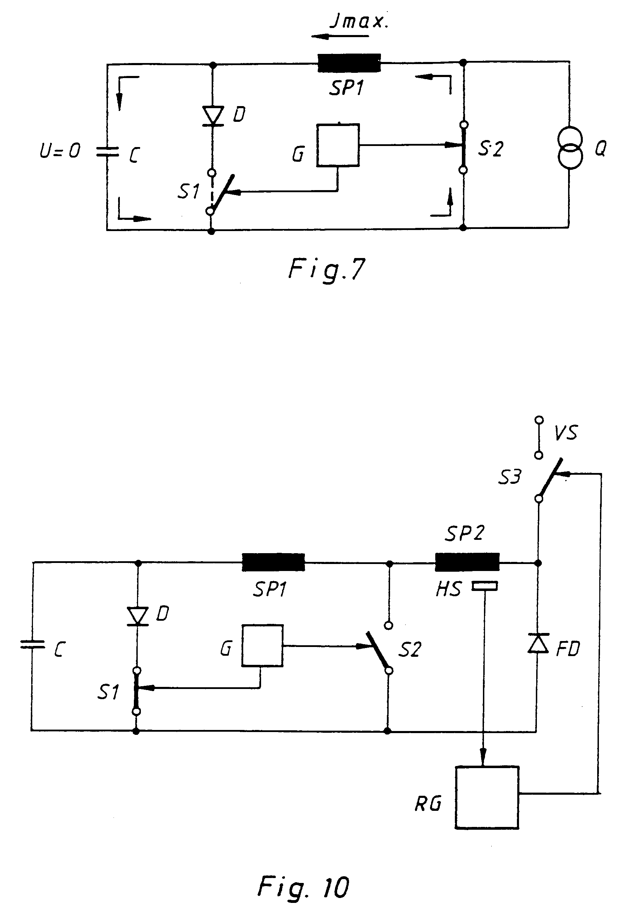

In der Figur 10 ist ein zweites Ausführungsbeispiel abgebildet, das den Aufbau der Stromquelle Q zeigt.

Parallel zum steuerbaren Schalter S2 liegt eine Reihenschaltung aus einer Spule SP2 und einer Freilaufdiode FD. Der Verbindungspunkt der Spule SP2 und der Freilaufdiode FD liegt über einen steuerbarer Schalter S3 am einen Pol einer Versorgungsspannungsquelle VS, deren anderer Pol mit dem gemeinsamen Verbindungspunkt der Freilaufdiode FD und des steuerbaren Schalters S2 verbunden ist. Ein Hallsensor HS, der den Strom durch die Spule SP2 mißt, ist mit dem Eingang eines Zweipunktreglers RG verbunden, dessen Ausgang mit dem Steuereingang des steuerbaren Schalters S3 verbunden ist. Der Zweipunktregler RG regelt durch öffnen und Schließen des steuerbaren Schalters S3 den Strom durch die Spule SP2 auf einen konstanten Wert.

Ein wesentlicher Vorteil der Erfindung liegt darin, daß sie die zwei in der Regel sich widersprechenden Forderungen nach geringem Energieverbrauch und zugleich einfachem Aufbau erfüllt.

Die Erfindung bietet bei magneto-optischen Aufzeichnungs- und Wiedergabegeräten den Vorteil, daß bereits auf der magneto-optischen Platte aufgezeichnete Daten unmittelbar überschrieben werden können. Dagegen werden bei bekannten magneto-optischen Aufzeichnungs- und Wiedergabegeräten zuerst die alten Daten gelöscht, ehe neue Daten aufgezeichnet werden.

Zu diesem Zweck wird die magneto-optische Schicht an den Stellen, wo die neuen Daten gespeichert werden sollen, vom Laser auf die Kompensationstemperatur erhitzt. Dadurch werden diese Stellen in die eine Richtung magnetisiert. Die Platte wird initialisiert, wie der Fachausdruck für diesen Vorgang lautet. Anschließend wird die Richtung des in der Spule erzeugten Magnetfeldes wieder umgekehrt.

Zum Aufzeichnen der neuen Daten wird die Laserleistung zwischen einem kleinen und großen Wert in Abhängigkeit vom zu speichernden Bit geschaltet. Wird an der zuvor gelöschten Stelle beispielsweise eine logische Null gespeichert, so arbeitet der Laser mit der kleinen Leistung, damit die Kompensationstemperatur nicht erreicht wird. Zum Aufzeichnen einer logischen Eins erhitzt der Laser dagegen die neu zu beschreibende Stelle auf die Kompensationstemperatur, damit diese Stelle von der Spule ummagnetisiert werden kann. Auf diese umständliche Weise werden Daten auf der magneto-optischen Platte zuerst gelöscht, ehe anschließend die neuen Daten aufgezeichnet werden.

Die Erfindung ist nicht nur für magneto-optische Geräte, sondern auch für andere magnetische Aufzeichnungsgeräte geeignet.

## Patentansprüche

1. Schaltungsanordnung zur Umkehrung eines Magnetfeldes mit einer Kapazität (C) und einer ersten Spule (SP1), die einen Resonanzkreis bilden, **dadurch gekennzeichnet**,
daß die Kapazität (C), ein erster steuerbarer Schalter (S1) sowie eine Reihenschaltung aus der ersten Spule (SP1) und einem zweiten steuerbaren Schalter (S2) parallel geschaltet sind, daß an die beiden Anschlüsse des zweiten steuerbaren Schalters (S2) eine Stromquelle (Q) angeschlossen ist, daß der erste und der zweite steuerbare Schalter (S1, S2) von einer Steuerschaltung (G) gesteuert werden, daß im Grundzustand der erste steuerbare Schalter (S1) geschlossen, der zweite steuerbare Schalter (S2) dagegen geöffnet ist, daß zur Umkehrung des Magnetfeldes der ersten Spule (SP1) die Steuerschaltung (G) in einem ersten Schaltschritt den ersten steuerbaren Schalter (S1) öffnet und gleichzeitig den zweiten steuerbaren Schalter (S2) schließt, daß in einem zweiten Schaltschritt die Steuerschaltung (G) den ersten steuerbaren Schalter (S1) wieder schließt und den zweiten steuerbaren Schalter (S2) wieder öffnet, wenn der Spulenstrom (I) nach einem Um Umladezyklus der Kapazität (C) wieder auf das absolute Maximum (Imax) angestiegen ist.

2. Schaltungsanordnung nach Anspruch 1, **dadurch gekennzeichnet**, daß in Reihe zum ersten steuerbaren Schalter (S1) eine Diode (D) geschaltet ist, um den Strompfad durch den ersten steuerbaren Schalter (S1) zu sperren.

3. Schaltungsanordnung nach Anspruch 2, **dadurch gekennzeichnet**, daß die Steuerschaltung (G) im zweiten Schaltschritt den ersten steuerbaren Schalter (S1) wieder in dem Zeitintervall (t3, t5) schließt, während dem der Spulenstrom (I) vom absoluten Minimum (Imin) zum absoluten Maximum ansteigt (Imax).

4. Schaltungsanordnung nach Anspruch 1, 2 oder 3, **dadurch gekennzeichnet**, daß parallel zu den beiden Anschlüssen des zweiten steuerbaren Schalters (S2) eine Reihenschaltung aus einer zweiten Spule (SP2) und einer Freilaufdiode (FD) liegt, daß der gemeinsame Verbindungspunkt der zweiten Spule (SP2) und der Freilaufdiode (FD) über einen dritten steuerbaren Schalter (S3) mit dem einen Pol einer Versorgungsspannungsquelle (VS) verbunden ist, deren anderer Pol mit dem gemeinsamen Verbindungspunkt des zweiten steuerbaren Schalters (S2) und der Freilaufdiode (FD) verbunden ist, daß an der zweiten Spule (SP2) ein Stromfühlelement (HS) angeordnet ist, das mit dem Eingang eines Reglers (RG) verbunden ist, der den Strom durch die zweite Spule (SP2) regelt, und daß der Ausgang des Reglers (RG) mit dem Steuereingang des dritten steuerbaren Schalters (S3) verbunden ist.

5. Schaltungsanordnung nach Anspruch 4, **dadurch** **gekennzeichnet**, daß als Stromfühlelement (HS) eine Hallsonde vorgesehen ist.

## Claims

1. A circuit arrangement for the reversal of a magnetic field, with a capacitor (C) and a first coil (SP1) which form a resonant circuit, characterised in that the capacitor (C), a first controllable switch (S1) as well as a series connection of the first coil (SP1) and a second controllable switch (S2) are connected in parallel, that a current source (Q) is connected to the two terminals of the second controllable switch (S2), that the first and the second controllable switches (S1, S2) are controlled by a control circuit (G), that in the basic state, the first controllable switch (S1) is closed, while the second controllable switch (S2) is open, that for reversing the magnetic field of the first coil (SP1) the control circuit (G), in a first switching step, opens the first controllable switch (S1) and simultaneously closes the second controllable switch (S2), that, in a second switching step, the control circuit (G) closes the first controllable switch (S1) and opens again the second controllable switch (S2) when the coil current (I) has risen again to the absolute maximum (Imax) following a reverse charging cycle of the capacitor (C).

2. A circuit arrangement according to claim 1, characterised in that a diode (D) is connected in series with the first controllable switch (S1) in order to block the current path through the first controllable switch (S1).

3. A circuit arrangement according to claim 2, characterised in that in the second switching step, the control circuit (G) closes again the first controllable switch (S1) in the time interval (t3, t5) during which the coil current (I) climbs from the absolute minimum (Imin) to the absolute maximum (Imax).

4. A circuit arrangement according to claim 1,2 or 3, characterised in that a series connection of a second coil (SP2) and a freewheeling diode (FD) is arranged in parallel with the two terminals of the second controllable switch (S2), that the common connection point of the second coil (SP2) and the freewheeling diode (FD) is connected, via a third controllable switch (S3), to the one pole of a supply voltage source (VS), the other pole of which is connected to the common connection point of the second controllable switch (S2) and the freewheeling diode (FD), that there is arranged at the second coil (SP2) a current sensor element (HS) which is connected to the input of a controller (RG), which controls the current through the second coil (SP2), and that the output of the controller (RG) is connected to the control input of the third controllable switch (S3).

5. A circuit arrangement according to claim 4, characterised in that a Hall probe is provided as the current sensor element (HS).

## Revendications

1. Circuit d'inversion d'un champ magnétique pourvu d'un capaciteur (C) et d'une première bobine (SP1) formant un circuit résonnant, **caractérisé en ce que** le capaciteur (C), un premier commutateur commandable (S1) ainsi qu'un couplage en série se composant de la première bobine (SP1) et d'un second commutateur commandable (S2), sont montés en parallèle, **en ce qu'**une source de courant (Q) est raccordée aux deux dérivations du second commutateur commandable (S2), **en ce que** le premier et le second commutateurs commandables (S1, S2) sont commandés par un circuit de commande (G), **en ce que** le premier commutateur commandable (S1) est fermé en état initial, alors que le second commutateur commandable (S2) est lui ouvert, **en ce que** le circuit de commande (G) ouvre le premier commutateur commandable (S1) dans une première étape de commutation et ferme en même temps le second interrupteur commandable (S2), afin d'inverser le champ magnétique de la première bobine (SP1), **en ce que** le circuit de commande (G) referme le premier commutateur commandable (S1) et ouvre le second commutateur commandable (S2) dans une seconde étape de commutation, lorsque le courant (I) provenant de la bobine a, de nouveau, atteint le maximum absolu (Imax) après un cycle de recharge du capaciteur (C).

2. Circuit selon la revendication 1, **caractérisé en ce qu'**une diode (D) est montée en série par rapport au premier commutateur commandable (S1), de manière à bloquer la voie du courant au moyen du premier commutateur commandable (S1).

3. Circuit selon la revendication 2, **caractérisé en ce que** le circuit de commande (G) referme le premier commutateur commandable (S1) dans une deuxième étape de commutation au moment (t3, t5), moment pendant lequel le courant (I) provenant de la bobine augmente et passe du minimum absolu (Imin) au maximum absolu (Imax).

4. Circuit selon les revendications 1, 2 ou 3, **caractérisé en ce qu'**un couplage en série se composant d'une seconde bobine (SP2) et d'une diode de roue libre (FD) est placé parallèlement au commutateur commandable (S2), **en ce que** le point de connexion de la seconde bobine (SP2) et de la diode de roue libre (FD) est relié au moyen d'un troisième commutateur commandable (S3), à un pôle d'une source de tension d'alimentation (VS), dont l'autre pôle est lui relié avec le point de connexion commun de la diode de roue libre (FD) et du second commutateur commandable (S2), **en ce qu'**un élément détecteur de courant (HS) est placé sur la seconde bobine (SP2), cet élément étant relié avec l'entrée d'un régulateur (RG), dont la sortie est reliée avec l'entrée de commande du troisième commutateur commandable (S3).

5. Circuit selon la revendication 4, **caractérisé en ce** **qu'**on utilise une sonde à effet de Hall comme détecteur de courant (HS).
